(19) **Europäisches Patentamt / European Patent Office / Office européen des brevets**

(11) **EP 4 668 415 A1**

(12) **EUROPEAN PATENT APPLICATION**

(43) Date of publication:
24.12.2025 Bulletin 2025/52

(21) Application number: 25183141.8

(22) Date of filing: 16.06.2025

(51) International Patent Classification (IPC):
H01M 10/613 (2014.01)     H01M 10/627 (2014.01)
H01M 50/204 (2021.01)     H01M 10/42 (2006.01)
H01M 10/48 (2006.01)      H01M 10/63 (2014.01)
H01M 10/6556 (2014.01)    H01M 10/6562 (2014.01)
H01M 10/6566 (2014.01)    H01M 10/658 (2014.01)
H01M 10/663 (2014.01)     H01M 50/207 (2021.01)
H01M 50/258 (2021.01)     H01M 50/502 (2021.01)

(52) Cooperative Patent Classification (CPC):
H01M 50/258; H01M 10/425; H01M 10/48;
H01M 10/613; H01M 10/627; H01M 10/63;
H01M 10/6556; H01M 10/6557; H01M 10/6562;
H01M 10/6566; H01M 10/658; H01M 10/663;
H01M 50/204; H01M 50/207; H01M 50/502;

(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 17.06.2024 DE 102024117027

(71) Applicant: Sonnen GmbH
87499 Wildpoldsried (DE)

(72) Inventors:
• HIRNET, Alexander
73447 Oberkochen (DE)
• SCHLEGEL, Peter
87494 Rückholz (DE)
• VRACAR, Milos
87600 Kaufbeuren (DE)

(74) Representative: Platzöder
Patentanwaltsgesellschaft mbH
Inselkammerstraße 10
82008 Unterhaching (DE)

(54) **MODULAR ELECTROCHEMICAL ENERGY STORAGE SYSTEM**

(57) A modular electrochemical energy storage system comprises a plurality of modules. These include: at least one energy storage module, which is configured for the electrochemical storage of energy and has a first housing of a first housing type; and at least one control module, which is configured as an inverter and control unit for at least partial control of the energy storage system and comprises a second housing of a second housing type. The first housing and the second housing each comprise at least one housing opening on their upper housing sides and lower housing sides. In this case, a plurality of modules can be stacked vertically one on top of the other, regardless of their housing design, in such a way that, in the case of respective two modules which are vertically adjacent in the stack, a housing opening on the housing lower side of the upper of the two modules overlaps a housing opening on the housing upper side of the lower of the two modules in such a way that, by means of these overlapping housing openings, a vertical line routing for the line-bound connection of a module which is located in the stack (directly or indirectly) above the lower of the two modules is made possible. The connection can be, in particular, an electrical and/or a hydraulic connection.

Fig. 4

(52) Cooperative Patent Classification (CPC): (Cont.)
H01M 2220/10

**Description**

The invention relates to a modular electrochemical energy storage system comprising a plurality of modules. In particular, it can be an energy storage system for storing electrical energy obtained by means of photovoltaics, for example as an energy storage system for commerce and industry (in English: "Commercial & Industry" or "C&I" for short) or for private use in residential buildings. For electrochemical energy storage, such an energy storage system can in particular contain one or more electrochemical batteries (in particular accumulators), for example lithium-ion accumulators or sodium-ion accumulators.

Potential users of energy storage systems for C&I are in particular small craft businesses, supermarkets, car dealerships or large industrial companies. As a result of this wide range of applications, a C&I storage should be able to be configured flexibly according to customer requirements. Especially in outdoor installations, this can lead to further challenges, such as the tightness and temperature management of the storage systems.

Up to now, in energy storage systems to be installed outdoors, in particular for C&I, either large container solutions (e.g. 20 ft. (foot) containers) or smaller outdoor solutions were used. Container solutions can be populated flexibly, but always require the maximum space requirement. Some suppliers therefore sell 10 ft, 15 ft and 20 ft. solutions to minimize the problem.

Small outdoor solutions are usually offered in a fixed configuration, e.g. as a system with the characteristic values 100 kW/200 kWh for power and storage capacity. If more power or capacity is needed, another system must be purchased. The power to energy ratio cannot be adjusted in this case. As an alternative, systems with different sizes are known.

Another important problem with all battery storage systems (especially lithium-ion batteries) is the fire protection or the limitation of the spread of a localized fire or temperature hotspot. In particular, the phenomenon of thermal runaway of lithium-ion cells is known. This can lead to local temperatures of several hundred degrees Celsius. Typically, such incidents result in the escape of a great amount of combustible and explosive gases, such as hydrogen, methane, ethane, etc.

An ignition source and oxygen, e.g. from the surrounding air, can then cause a fire. Due to the local high temperatures, the thermal runaway can also be easily transferred to adjacent cells without suitable countermeasures, allowing even more combustible and explosive gases to escape into the battery housing and further increase the extent of a fire.

In the operation of electrochemical energy storage devices (batteries, cells), the control of the battery or cell temperature is of great importance. On the one hand, the heat loss during the charging or discharging process increases the battery or cell temperature and, on the other hand, batteries or cells (especially lithium-ion batteries/cells) may only be operated in a defined temperature range. For larger storage systems, in addition to purely passive cooling, liquid cooling, active temperature control by air conditioning units mounted on the outside of the battery housing and active fans per battery module are currently known.

It is an object of the invention to provide an improved electrochemical energy storage system which addresses at least one of the above-mentioned requirements.

To achieve this object, a modular electrochemical energy storage system according to the teaching of claim 1 is proposed. Various embodiments and developments of the solution are the subject matter of the dependent claims.

A first aspect of the solution relates to a modular electrochemical energy storage system having a plurality of modules. These include:

(i) at least one energy storage module, which is configured for electrochemical storage of energy and has a first housing of a first housing type; and

(ii) at least one control module, which is configured as an inverter and control unit for at least partial control of the energy storage system and has a second housing of a second housing type.

The first housing and the second housing each have at least one housing opening on their respective upper housing sides and lower housing sides. In this case, a plurality of modules can be stacked vertically one on top of the other, regardless of their housing design, in such a way that, in the case of respective two modules which are vertically adjacent in the stack, a housing opening on the housing lower side of the upper of the two modules overlaps with a housing opening on the housing upper side of the lower of the two modules in such a way that, by means of these overlapping housing openings, a vertical line routing for the line-bound connection of a module which is located in the stack (directly or indirectly) above the lower of the two modules is made possible. The connection can be, in particular, an electrical and/or a hydraulic connection.

Due to its modular design, the size and performance of the energy storage system can be varied to a large extent by a corresponding selection of the type and number of modules inserted into the energy storage system. In particular, this approach also makes it possible to subsequently adapt an already existing energy storage system, whether in order to expand or reduce its capabilities or capacities. In particular, it is thus possible to vary the storage capacity of the energy storage system by changing the number of energy storage modules.

It is also possible, in particular, to vary the available power (during charging and/or discharging of the at least one energy storage module) by changing the number of control modules and therefore the inverter capacity. The energy storage system can thus be easily adapted to a wide variety of applications and requirements, both initially in its construction and subsequently in the case of requirements which change over time, without the energy storage system having to be replaced by a system of different dimensions or supplemented by further complete energy storage systems.

The particular design of the first and second housings with their respective housing openings permits a vertical stacking of different modules independently of their housing design and function and thus in a highly flexible arrangement, so that a vertical line routing is made possible in a simple manner, whether for electrical or hydraulic connections of one or more of the modules of the stack, which can bring advantages in particular with regard to easier, faster and/or less complex installation and maintenance. Furthermore, in this way, it is possible to provide for at least partly vertical line laying protected against external influences without further installation space for the energy storage system being required outside the modules.

In addition, the cost for the development, production and/or storage of such energy storage systems can be reduced in comparison with the aforementioned currently known systems, since a variety of very different configurations of the energy storage system is made possible from only a few components (in particular modules), without different overall systems having to be developed, produced or stored for this purpose.

Terminology

Some of the terms used to define this solution are explained in more detail below:
The term "module", as used herein, is to be understood to mean a component for the modularized construction of a system, the system being configured in such a way that it is or can be composed of components along defined locations. The opposite construction is called an integral construction, or also monolithic.

The term "control", as used herein, is to be understood in particular as a control in the narrower sense ("open loop") or a regulation ("closed loop").

The term "control" in the narrower sense is to be understood here as an operation in a system in which one or more variables as input variables influence variables other than output variables on the basis of the laws intrinsic to the system. Characteristic for the control is the open or a closed path of action, in which the output variables influenced by the input variables do not act continuously and do not act again on themselves via the same input variables.

The term "regulation", on the other hand, is to be understood as meaning a process in which a variable, the regulated variable (variable to be regulated), is detected continuously or repeatedly, compared with another variable, the reference variable, and influenced in the sense of an adaptation to the reference variable. Characteristic of the regulation is the closed action loop, in which the regulated variable continuously influences itself in the action path of the control circuit.

The term "type of housing", as used herein, is to be understood in particular as meaning the totality of geometry, dimensions, housing material, thermal insulation and tightness (against the penetration of fluids, for example air or water or moisture or particles) of a housing. According to this definition, two housings are of the same housing design if they match in all of these parameters. Otherwise, they have different housing designs.

As possibly used herein, the terms "comprises", "contains", "includes", "has", "having", "with" or any other variant thereof are intended to cover non-exclusive inclusion. In particular, a method or a device that comprises or has a list of elements is not necessarily restricted to these elements, but may include other elements that are not expressly listed or that are inherent to such a method or device.

Furthermore, unless expressly stated to the contrary, "or" refers to an inclusive or and not to an exclusive "or." For example, a condition A or B is met by one of the following conditions: A is true (or present) and B is false (or absent), A is false (or absent) and B is true (or present), and both A and B are true (or present).

The terms "a" or "an" as possibly used herein, are defined in the meaning of "one or more". The terms "another" and "a further" and any other variant thereof are to be understood to mean "at least another".

The term "plurality" as possibly used herein is to be understood to mean "two or more".

The terms "first", "second", "third" and similar terms in the description and claims are used to distinguish between similar or otherwise equally named elements and are not necessarily descriptive of a sequential, spatial, or chronological order. It should be understood that the terms so used are interchangeable under appropriate circumstances, and that the embodiments of the solution described herein may also operate in different orders than those described or illustrated herein.

The term "configured" or "set up" to perform a specific function (and respective modifications thereof), possibly used herein, is to be understood to mean that the corresponding device or component thereof is already provided in a design or setting in which it can execute the function or that it is at least settable - namely configurable - so that it can execute the function after corresponding setting. The configuration can take place, for example, via a corresponding setting of parameters of a process sequence or of switches or the like for activating or deactivating functionalities or settings. In particular, the device can have a plurality of predetermined configurations or operating modes, so that the configuration can be carried out by selecting one of these configurations or operating modes.

Various exemplary embodiments of the energy storage system are described hereinafter, which in each case, unless expressly excluded or technically impossible in consideration of possible dependencies, can be combined as desired with one another.

In some embodiments, the energy storage system furthermore has a base structure which is configured as a support structure for the direct or indirect support of the modules. The base structure can thus be designed in particular as a supporting base for all further components of the entire energy storage system. The base structure can be understood in particular as a component of the energy storage system which can contribute to the modular construction of the system.

In some embodiments, the base structure also has at least one conduit which is protected against external influences and is configured for the horizontal laying of one or more, in particular electrical and/or hydraulic, connecting lines between two or more modules which can be carried or are carried horizontally next to one another by the base structure. In particular, one or more conduits can be designed in each case entirely or in part as a flexible, in particular elastic, hose or as a tube. The conduit or at least one conduit thus provides the possibility of laying the horizontal connecting line(s) in a spatial region within the energy storage system which is largely protected against external influences, such as moisture or water or particles or other types of dirt or corrosion-initiating agents.

In particular, the base structure can have at least two conduits which are each protected against external influences and which are each configured for the horizontal laying of one or more connecting lines between two or more modules which are supported horizontally next to one another by the base structure. Thus, for example, hydraulic lines on the one hand and electrical lines on the other hand can be laid in different conduits, in particular in the case of a plurality of lines of the same type also bundled. This can help to facilitate later reconfiguration of the energy storage system or its maintenance. It may also be advantageous, in particular with regard to electromagnetic compatibility (EMC), to lay power cables and signal cables separately from one another in different conduits.

In some embodiments, the base structure is formed at least in part from a mineral material, for example from concrete. This is advantageous, on the one hand, with regard to the fire resistance of the material used to produce the base structure. On the other hand, this also makes it possible, in particular, to use mineral materials which can be shaped before curing and thus, on a case-by-case basis, to specifically shape, in particular cast, a base structure configured for the specific application (for example in the case of concrete or related mineral building materials).

In some embodiments, the housing openings of at least one of the modules, for example one or more energy storage modules, are each provided with a fluid-tight seal. This is particularly advantageous with regard to the installation and use of the energy storage system outdoors or in other demanding environments (for example in a factory environment), in order to prevent undesired penetration of liquids (for example water), dirt or undesired, for example corrosive, gases into the interior of the housing and thus impairment of the functionality, reliability or service life of the module.

In some embodiments, a first connector is arranged in a housing opening on the housing upper side of a module, and a second connector corresponding to the first connector is arranged in a housing opening on the housing lower side of a further module. The two connectors are configured to establish a detachable line connection between them and thus between the two modules. They can be, in particular, plug-in or screw connectors. These two housing openings of the two modules are arranged in such a way that the two modules can be stacked vertically one above the other in such a way that the two housing openings overlap during stacking, and the detachable line connection is thereby produced. This possibility represents an alternative to the mere passage of lines through the overlapping openings, which is particularly suitable for electrical connections.

In some embodiments, the energy storage system furthermore has one or more covers, in each case for closing, in particular in a fluid-tight and/or thermally insulating manner, a housing opening of a respective module which is not required for vertical line routing or line connection. This is particularly advantageous, as with the previously cited seals, with regard to the installation and use of the energy storage system outdoors or in other demanding environments (for example in a factory environment), in order to prevent undesired penetration of liquids (for example water), dirt or undesired, for example corrosive, gases into the interior of the housing through the unused housing opening and thus an impairment of the functionality, reliability or service life of the module.

In some embodiments, the first housing type and/or the second housing type each has a cuboid outer contour. In particular, the cuboid outer contour can be at least approximately cubic, so that the edge lengths of the outer contour differ by not more than 15%, in particular by not more than 10%, and further in particular by not more than 5% of the longest edge length. The use of housings with such cuboid, in particular cubic, outer contours is particularly advantageous with regard to good stackability of the modules and their respective variable arrangement within the energy storage system.

In some embodiments, the first type of housing and the second type of housing coincide with respect to their outer contour, with respect to their type of protection against the penetration of foreign bodies or fluids and/or with respect to a number and/or position of their housing openings. The similarity, or at least high similarity, of the two types of housing thus provided further promotes the high variability with respect to the possible arrangements of the various modules within the energy storage system.

In some embodiments, the housing of the first housing type is protected in such a way that it has a higher protection against the penetration of foreign bodies or fluids than the housing of the second housing type. In this way, a differentiation between the first and the second housings can be achieved according to requirements. In particular, unnecessary additional expenditures for a higher degree of protection for the second housings can be saved, if possible in a case-related manner.

In some embodiments, a wall of at least one first housing and/or at least one second housing is lined at least in sections with a thermally insulating and refractory protective layer on its respective inner side or outer side. The protective layer may in particular contain rock wool or be completely built up therefrom. The protective layer serves to prevent, or in any case make less likely, the spreading of fire or a strong thermal heat transport from one housing to another, in particular directly adjacent housing. In this way, the danger of a thermal runaway in particular can be effectively countered.

The protective layer may in particular have the following properties in order to be able to offer good protection:

- the mechanical integrity and thermal insulation of the protective layer are maintained at atmospheric pressure up to a temperature of at least 500 °C, preferably of at least 1000 °C;
- the melting point of the protective layer at atmospheric pressure is at least 500 °C, preferably at least 1000 °C;
- the thermal conductivity of the protective layer is less than 0.035 W/(m·K).

A second aspect of the solution, which can be implemented at the same time as an embodiment of the energy storage system according to the first aspect, relates to an energy storage system with gas-based temperature control.

It comprises at least one energy storage module within its (first) housing: (i) a plurality of battery modules which are arranged in a stack and each have one or more battery cells; (ii) a storage box for a gaseous temperature control medium, in particular air; and (iii) an air conditioner which is configured to control the temperature of the temperature control medium in the interior of the housing and to introduce it into the storage box in order to build up an excess pressure there. In this case, the battery modules are stacked in such a way that an intermediate space is in each case located between battery modules adjacent in the stack. The storage box has outlet openings for the temperature control medium corresponding to the intermediate spaces in such a way that, during operation of the air conditioner, the temperature control medium under excess pressure in the storage box flows into at least some of the intermediate spaces when it flows out of the outlet openings, in order to control the temperature of the battery modules adjacent to the respective intermediate space, that is to say to cool or heat them as required.

The storage box serves in particular to store the temperature control medium when flowing through the storage box in such a way that an excess pressure is created in it, which can be used as a result in order to bring about the most uniform possible outflow of the temperature control medium through the outlet openings.

The above-mentioned construction of the energy storage module thus makes it possible to go beyond the purely passive cooling, e.g., via cooling surfaces or cooling bodies, which has usually been practiced hitherto in known solutions, and instead or additionally to provide an active cooling and thus also to enable more efficient cooling than in the purely passive case. Compared to liquid cooling, in particular, expenditure for installation, maintenance and repair can be saved, since the hydraulic lines typical of liquid cooling typically make this more difficult. Compared to external air conditioning units, a simplification of the gas or air routing can be achieved and large differences in the temperature distribution of the battery modules, which often occur there, can be reduced or even avoided. Compared to active fans, in turn, expenditure and installation space can also be saved, since a separate fan no longer has to be provided for each battery module. In addition, active heating or cooling is now possible.

The intermediate spaces through which the temperature control medium flows during operation of the energy storage system also contribute to increasing fire protection, since they can have a thermally insulating effect, in particular in the case of cooling as a temperature control measure.

The minimum diameter of the intermediate spaces is preferably at least 5 mm in order to achieve a good and as uniform as possible guidance of the temperature control medium and a high heat exchange between the modules around which flow occurs and the temperature control medium as reliably as possible, in particular in the case of air as the temperature control medium.

In addition, a discharge channel can be provided between the inner wall of the housing and the end faces of the battery modules adjacent to the inner wall, through which the temperature control medium can be returned to the air conditioner after flowing through the intermediate spaces between the battery modules, in particular under suction by the air conditioner, so that during its operation a circulation of the temperature control medium in the housing is produced which is driven by it. Thus, in turn, a particularly effective, continuous temperature control of the battery modules can be supported.

In some embodiments, the storage box has in its interior one or more gas guide elements which are configured to set the temperature control medium introduced into the storage box by the air conditioner at least in part into a circulation movement in the interior of the storage box. This serves to achieve the above-mentioned desired uniformity of the outflow of the temperature control medium through the outlet openings more effectively.

In some embodiments, the arrangement of the battery modules in the first housing comprises two stacks of in each case a plurality of battery modules. The storage box and the air conditioner are arranged in a space region lying between the two stacks, so that the temperature control medium flowing out of the storage box through its outlet openings during operation of the air conditioner can flow into the respective intermediate spaces in both stacks for their respective temperature control. Thus, a particularly space-saving arrangement with a high volumetric energy density related to the energy storage module can be achieved.

A particularly effective optimization of the volumetric energy density can be achieved if the following relationship applies to the energy storage module:

$$2 \cdot lb + lt1 + lt2 + lk \approx 2 \cdot bb + bk + bt1 + bt2 + ba \approx n \cdot (hb + hz) + ht1 + ht2 + ha,$$

with the following parameters:

lb: length of the battery module parallel to its stacking direction in the respective stack;
lt1/2: opposite lengths of the intermediate space between the housing inner wall and the stacks;
lt2: length of front intermediate space between
lk: maximum length of the space region between the two stacks
bb: width of battery module;
bk: maximum width of the space region between the two stacks;
bt1: width of thermal insulation between the housing inner wall and the first stack parallel to its stacking direction;
bt2: width of thermal insulation between the housing inner wall and the second stack parallel to its stacking direction;
ba: additional balancing width;
n: number of battery modules in the stack;
hb: height of battery module along stacking direction;
hz: height of the intermediate space between adjacent battery modules of a stack;
ht1: height of thermal insulation between the housing inner wall and the stack at its upper end;
ht2: height of thermal insulation between the housing inner wall and the stack at its lower end;
ha: additional balancing heights;

where "$A \approx B$" means: $A = B \cdot (1 \pm 0.15)$.

In some embodiments, the energy storage system is designed as a kit from which a completely installed energy storage system can be built up, while in other embodiments the energy storage system is already built up (installed) and fully functional. The modular construction of the energy storage system makes it possible in particular to market it as a kit, and also as a kit, the number of energy storage modules and control modules of which can be selected variably.

Further advantages, features, and possible applications of the present invention result from the following detailed description in conjunction with the figures.

In particular:

**FIG. 1** schematically shows a modular energy storage system according to an exemplary simple embodiment without a base structure;

**FIG. 2** schematically shows a modular energy storage system according to an exemplary simple embodiment with a base structure;

**FIGS. 3A and 3B schematically show a selection of various exemplary embodiments for the design of the energy storage system from different modules and a base structure in views** (a)-(f); FIG. 3B shows in view (g) details of a module or its housing with a respective housing opening on the housing lower side and the housing upper side;

**FIG. 4** schematically shows an exemplary embodiment of an energy storage system with vertical and horizontal line routing;

**FIG. 5** schematically shows an exemplary embodiment of an energy storage system with vertical and horizontal line routing using plug-in or screw contacts for the vertical connection of line sections assigned to the respective modules or the base structure;

**FIG. 6** schematically shows an exemplary embodiment of an energy storage module with an inner and an outer protective layer on the housing;

**FIG.** 7 schematically shows an exemplary embodiment of an energy storage system having a plurality of modules each protected by protective layers in the event of a thermal runaway event in an energy storage module of the system;

**FIG. 8** schematically shows an exemplary embodiment of an energy storage module in a view from above in cross-section;

**FIG. 9** schematically shows, as a conceptual section, a sectional drawing of the energy storage module of FIG. 8 with a view from a first side;

**FIG. 10** schematically shows a conceptual section of a sectional drawing of the energy storage module of FIG. 8 with a view from a second side opposite the first side;

**FIG. 11** schematically shows different views of a battery compartment of an energy storage module of FIG. 8 with a battery module arranged therein and illustrating flow paths of the temperature control medium during operation of the energy storage system;

**FIG. 12** shows a top view as a sketch for determining dimensions of the components installed in the energy storage module of FIG. 8 in view of optimizing the volumetric energy density of the energy storage module; and

**FIG. 13** shows an exemplary variant of the energy storage module of FIG. 8, in which a battery control unit is installed in the energy storage module for its control.

In the figures, the same reference numerals denote the same, similar or corresponding elements. Elements depicted in the figures are not necessarily represented to scale. Rather, the various elements shown in the figures are presented in such a way that their function and general purpose can be understood by those skilled in the art. Connections and couplings shown in the figures between functional units and elements can also be implemented as an indirect connection or coupling, unless expressly stated otherwise.

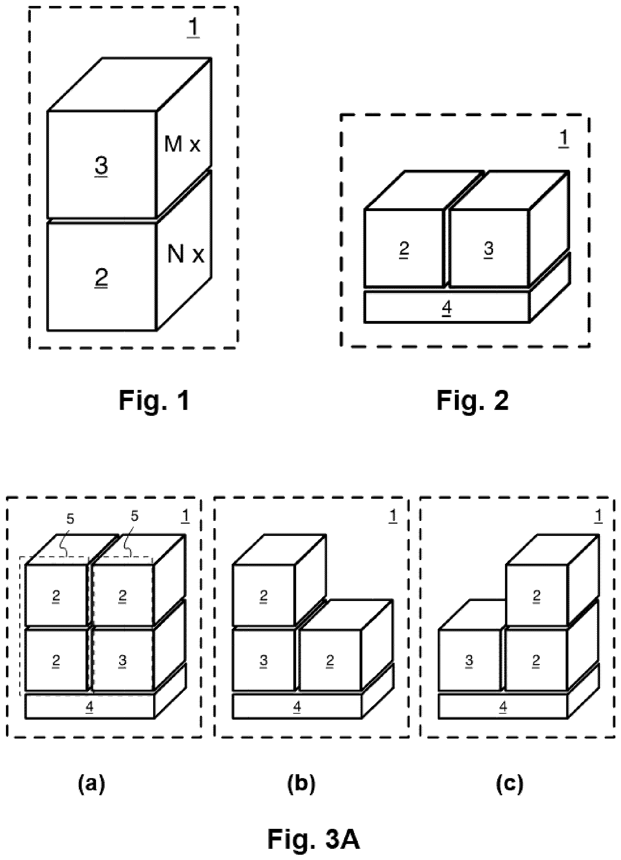

A modular energy storage system 1 shown in FIG. 1 according to an exemplary simple embodiment comprises a number N of energy storage modules 2 and a number M of control modules 3, where N and M are each natural numbers not equal to zero. In many cases, it is sufficient to provide a single control module 3, so that M=1 then applies.

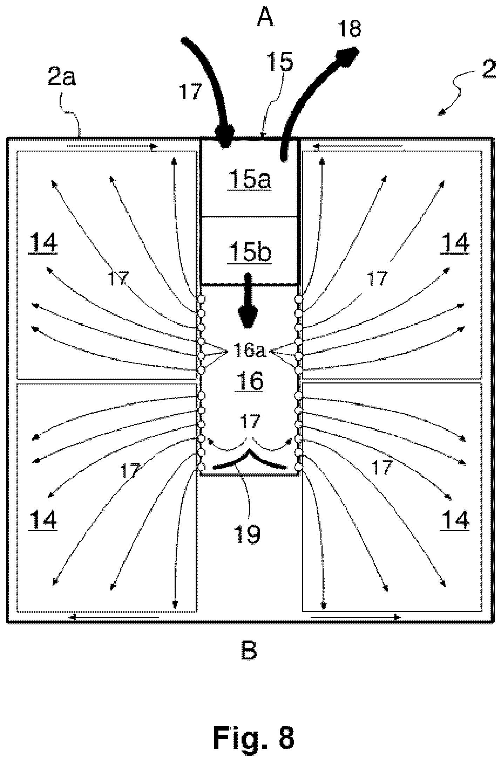

The or each energy storage module 2 has a (first) housing of a first design, in the interior of which, in particular, one or more batteries for electrochemical energy storage are arranged. Details of this will be explained below with reference to FIG. 8 and subsequent figures.

The or each control module 3 has a (second) housing of a second design, in the interior of which, in particular, at least one inverter for generating an alternating voltage from the direct voltage which can be provided by the energy storage module 2 during its discharge and/or for rectifying and controlling the energy storage system 1 are arranged. The alternating voltage generated in this way can then be fed into an alternating current grid, for example a power grid for domestic or industrial supply.

The housings of the first and second design are designed in such a way that they can be stacked (in particular with regard to their geometry and their weight), in particular one above the other, in order to make possible an at least partially vertical construction of the energy storage system 1.

In the exemplary embodiments illustrated in the figures, cubic (i.e. at least approximately cubic) housings are always shown in order to simplify the drawings, the housings of the first and second designs being identical in these examples with respect to their outer contours. However, the dimensions of the two housing types may differ from this shape. Both types of housings can also differ in the protection category (e.g. protection against penetration of foreign bodies and water). The housings of the first type for the energy storage module 2 generally have a higher protection category, so that the electrochemical energy storage devices (batteries) located therein are protected, for example, from water and moisture.

In particular, it can be advantageous, as shown in the figures, to place the or each control module 3 directly on the base structure instead of stacking it on another module, since in this way the power connection of the inverter in the control module 3 can take place particularly simply and with only short connecting lines through the base structure 4.

**FIG. 2** shows a modular energy storage system according to a further exemplary embodiment, in which the energy storage system 1 comprises a base structure 4 which is designed in particular as a load-bearing base for the two modules 2 and 3.

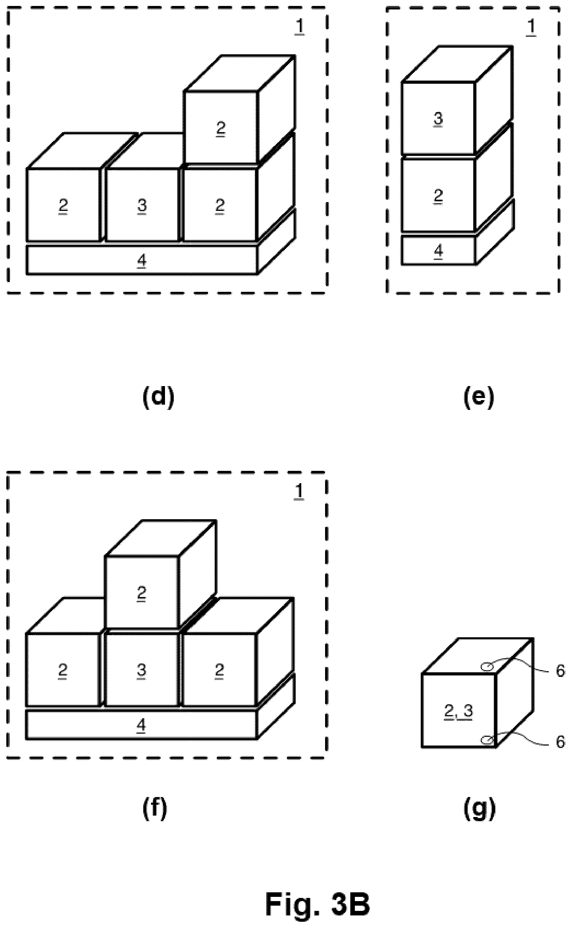

The **views (a) to (f), FIGS. 3A and 3B,** schematically illustrate a selection of various exemplary embodiments for forming the energy storage system 1 from various modules 2 and 3 and a base structure 4. The base structure 4 is adapted in each embodiment to the specific arrangement of the modules 2 and 3 with respect to their dimensions. The lowest modules are typically fixedly mounted on the base structure 4 during the installation of the energy storage system. The number N of the energy storage modules 2 and the number M of the control modules 3 can in principle be freely selected within the framework of the carrying capacities of the base structure and of the modules supporting other modules, so that a variety of very different configurations of the energy storage system 1 is possible. Often, however, a single control module 3 will be sufficient, so that M=1 then applies. An arrangement of modules 2 and/or 3 stacked on top of one another or an unstacked individual module arranged directly on the base structure is referred to herein in each case as "module strand" 5. In the views (a) to (c) there are thus two module strands in each case, in view (d) only one and in the views (e) and (f) in each case three.

The view (g) shows a detailed view of a module or its housing with a housing opening 6 on the housing lower side and the housing upper side. The housing openings 6 lie flush one above the other so that, when two housings of this type are stacked, one housing opening 6 on the lower side of the upper housing overlaps with a housing opening 6 on the upper side of the lower housing or even comes to lie exactly one above the other (flush). Thus, it is possible to provide a vertical line routing extending through the overlapping housing openings 6 in such a module stack.

The base structure 4 can be realized in different materials, e.g. as a metal housing or as a mineral-based structure (e.g. concrete). Combinations of different embodiments are also possible. The base structure is used in particular to provide a flat and load-bearing base and a closed and protected space for secure guidance of the connecting lines (electrical and hydraulic lines) for connecting the modules 2 and 3 to one another.

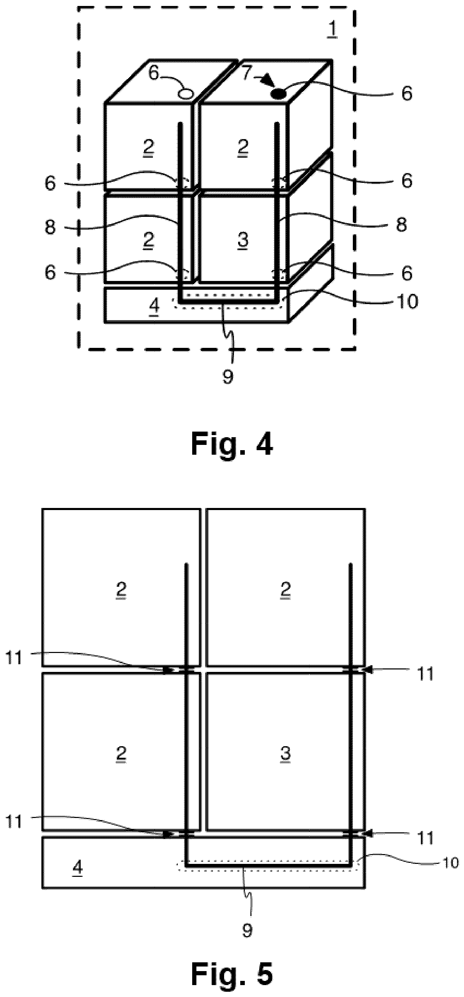

FIG. 4 shows an exemplary embodiment of an energy storage system 1 with vertical and horizontal line routing using the housing design of FIG. 3 for the modules 2 and 3. The energy storage system 1 according to this embodiment has two energy storage modules 2 as well as two control modules 3, which are arranged in two module strands each consisting of two of the modules on the base structure 4. Each of the two module strands has in each case an energy storage module 2 and a control module 3. The housing design of all four modules 2, 3 is identical in this example and has a cubic outer contour.

The modules 2 and 3 are arranged on the base structure 4 in such a way that the housing openings 6 of all the modules of the same module strand are arranged vertically aligned one above the other, so that a vertical line routing through the housing openings 6 of this respective module strand is made possible.

In order to connect the modules 2 and 3 to one another, in particular electrically and/or hydraulically, a vertical line 8 (or a bundle of such lines) is laid in the vertical direction in each of the two module strands, it being possible for the modules 2 and 3 to be connected thereto in each case. Overall, these vertical lines or line bundles 8 are thus protected against external influences by the housings of the modules of the respective module strand. The housing openings 6 can also be closed with a seal (not shown), in particular a fluid-tight seal, in such a way that, despite the passage of the lines, no significant disturbing influences can penetrate into the interior of the respective module housing.

In the base structure 4 there is also a conduit 10, which is designed as a cavity therein, for horizontal line routing. The two vertical lines or line bundles 8 of the two module strands are connected by a horizontal line 9 which runs through the conduit 10 in the base structure 4 and thus in a further protected space. The conduit 10 can be designed in particular as a hose or tube. There may also be a plurality of conduits 10 for different types of lines.

Overall, a U-shaped connecting structure is thus obtained from the lines 6 and 9, as a result of which all the modules 2 and 3 are or can be functionally connected to one another via the lines 8 and 9. As illustrated in FIG. 4 in the module at the top right, housing openings 6 which are not used for the line passage can be closed with a cover 7 (e.g. a cover with a seal) which is in particular fluid-tight (in particular air-tight and water-tight) in order to counteract impairment of the modules by external influences, in particular weather influences.

FIG. 5 shows a further embodiment of such an energy storage system 1, which is derived from that of FIG. 4 and largely corresponds thereto. However, plug connections 11 are provided here in each case for connecting the modules 2 and 3 of each module strand stacked one above the other and the modules 2 and 3 placed directly on the base structure 4 to the base structure 4. The plug connections are mounted in the housing openings, i.e. each side of the respective plug connection in one of the overlapping housing openings 6 of the modules involved or in an opening to the conduit in the base structure 4. This permits a particularly rapid and uncomplicated assembly of the energy storage system 1, since the functional connection of the modules 2 and 3 and the connection of the vertical line or line bundle 8 to the horizontal line 9 in the base structure 4 can be achieved already when the modules 2 and 3 of a respective module strand are stacked one above the other on the base structure 4 by means of the plug connections 11.

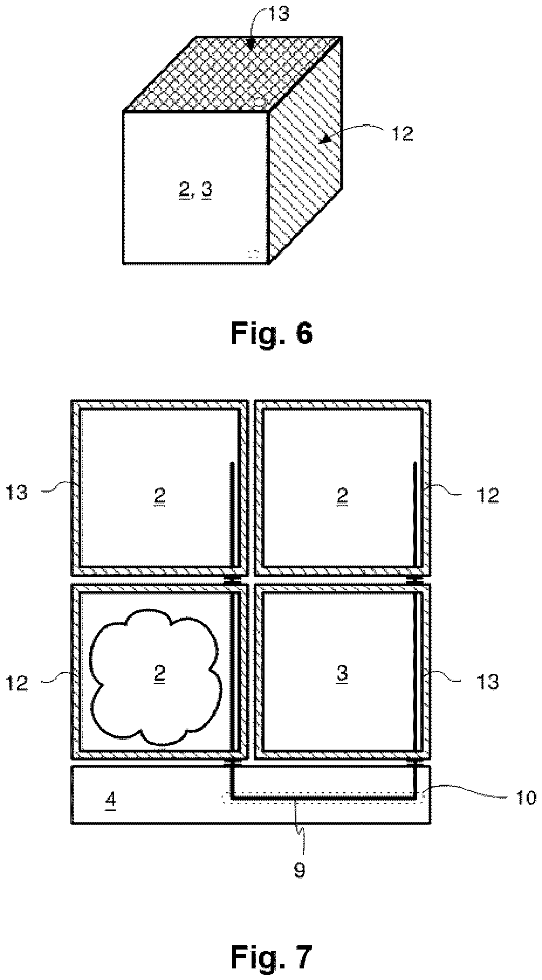

FIG. 6 shows schematically an exemplary embodiment of an energy storage module 1 with an outer protective layer 12 and an inner protective layer 13, each on the housing. Both protective layers are designed as thermal and refractory barriers to prevent a thermal event (e.g. thermal runaway, fire) from passing between different modules. The outer protective layer 12 is arranged on an outer wall of the module housing, while the inner protective layer 13 is arranged on an inner wall of the module housing. Whether an outer protective layer 12 or an inner protective layer 13 is used can be determined according to the application. In particular, it may be expedient in the case of an energy storage module to line the inner wall of its housing with an inner protective layer 13. This can be made in various forms, for example as a plate material. Alternatively, the thermally insulating and refractory protective layer, in particular in the case of control modules, can also be applied to the outer wall of the module housing.

The thermally insulating and refractory protective layers 12 and 13, respectively, can be applied for optimum protection in particular to all inner and outer walls of the housing, but at least to the wall regions which are or have to be arranged adjacent to other modules (horizontally or vertically) in the energy storage system 1. An important task of the protective layers 12 and 13 can consist in reducing a thermal energy transfer to adjacent modules and/or the environment around the energy storage system 1 in such a way that a spread of a fire or a thermal runaway is suppressed.

The thermally insulating and refractory protective layer 12 or 13 may in particular have the following properties in order to be able to perform its function well:

The mechanical and thermal properties should be maintained up to high temperatures. Ideally, the protective layer is therefore suitable for resisting temperatures of at least 500 °C, ideally of at least 1000 °C, without appreciable damage. Accordingly, their material should have a melting or evaporation point of at least 500 °C, ideally at least 1000 °C, and be refractory. The thermal conductivity of the material should be below 0.035 W/(m.K), in order to provide a good thermal barrier effect.

**FIG. 7** schematically shows an exemplary embodiment of an energy storage system 1 according to FIG. 5, the modules additionally being protected in each case with protective layers 12 or 13. In the energy storage module 2, shown by way of example at the bottom left in FIG. 7, a thermal runaway event symbolized by a cloud is occurring. However, the protective layers 12 and 13 provide thermal barriers to the adjacent modules 2 and 3, so that the event remains limited to the one affected energy storage module 2 and does not propagate to the other modules 2, 3. In the figure, a protective layer is also contained in the control module 3, but this can also be omitted, since it is typically less likely that a control module 3 will be the cause of a critical event than is the case with the energy storage modules 2.

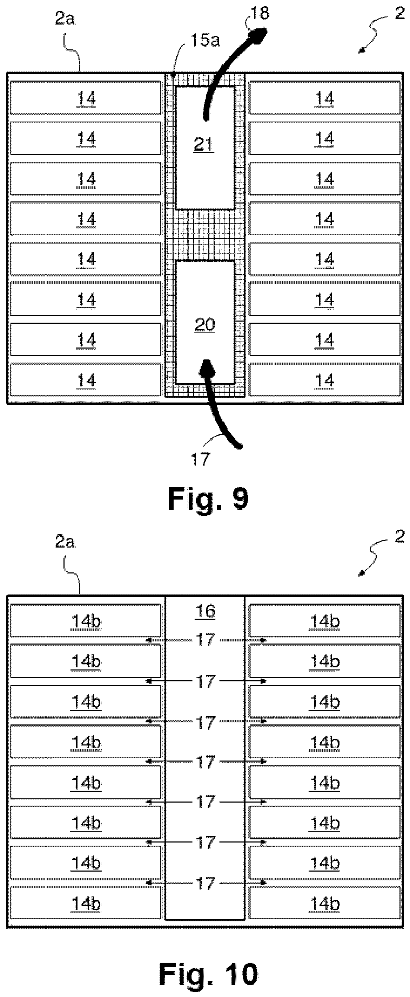

**FIGS. 8, 9 and 10** each schematically show in three different views a same exemplary embodiment of an energy storage module 2 with an integrated gas-assisted, in particular air-assisted, air-conditioning system. Specifically, each of FIGS. 8, 9 and 10 shows a view into the interior of the energy storage module 2. FIG. 8 shows a top view from the top side of the module, FIG. 9 shows a side view from side A and FIG. 10 shows a side view from side B (positions A and B are shown in FIG. 8).

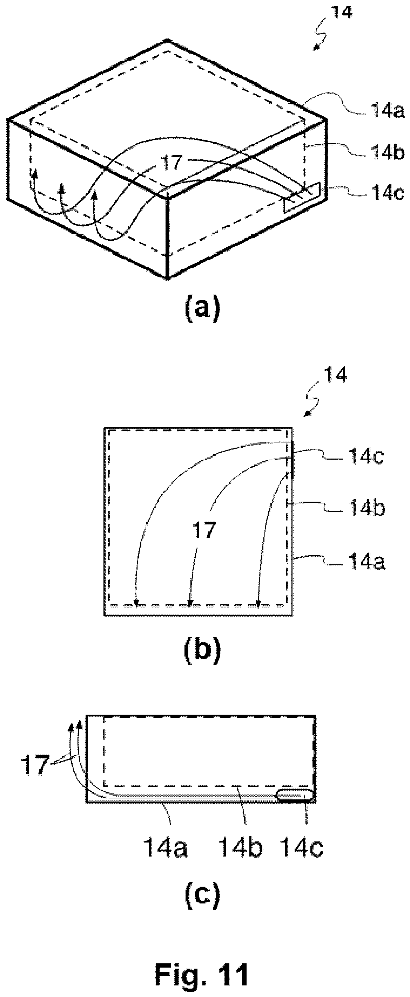

Four stacks with a plurality of battery regions 14 are arranged in the interior of the energy storage module 2. Each of the battery regions 14 has a battery compartment 14a with a battery module 14b arranged therein, for example a lithium-ion battery (cf. detailed view in FIG. 11). The arrangement of the battery region stacks is selected in such a way that two of them are arranged laterally directly adjacent as a pair, while between the two pairs of battery region stacks there is a space region in which an air conditioner 15 and a storage box 16, in particular an air storage box, are accommodated.

The air conditioner 15 is designed for temperature control, i.e. cooling or heating, of a gaseous temperature control medium 17, it being possible for the temperature control medium 17 to be, in particular, air, for example ambient air. All components 14, 15 and 16 are enclosed by the module housing 2a of the energy storage module 2.

The air conditioner 15 has an outer functional region 15a and an inner functional region 15b. The outer functional region 15a is coupled to two or more openings 20 and 21 ( FIG. **9)** in the module housing 2a in such a way that it can exchange gas, in particular air, with the environment of the energy storage module 2. The openings 20 and 21 can optionally be arranged on one and the same housing side of the module housing 2a or on different housing sides.

The gas or the air serves as a temperature control medium 17. The outer functional region 15a is arranged to draw the temperature control medium 17 through the opening 20 from the vicinity of the energy storage module 2 or a supply device (not shown) in order to allow the temperature control medium 17 to flow into the air conditioner 15. For this purpose, the outer functional region 15a may comprise a fan.

The inner functional region 15b of the air conditioner 15 represents a region of the air conditioner 15 which is used in particular for the circulation of the temperature control medium 17 in the interior of the module housing 2a. The storage box 16 is coupled in a gas-conducting manner to the inner functional region 15b in such a way that the temperature control medium 17 can flow from the inner functional region 15b into the storage box.

The inner functional region 15b has an intake opening through which the temperature control medium 17 is drawn in within the module housing 2a, is then cooled or heated for temperature control and is then blown into the air reservoir 16, for example by means of one or more fans. Active components for temperature control of the temperature control medium 17 (active heating elements or cooling elements) can in particular be divided between the two functional regions 15a and 15b.

The intake opening can be in particular an opening towards the outer functional region 15a, so that the temperature control medium 17 sucked in there from outside the energy storage module 2 can flow into the inner functional region 15b. Alternatively, it would be conceivable to provide a heat exchanger between the two functional regions instead, in which heat energy can be exchanged between the temperature control media in the outer and inner functional regions. In this embodiment (not illustrated in detail), it would be possible to use a different temperature control medium for the inner functional region 15b and the module interior than in the outer functional region 15a.

The air conditioner 15 and the storage box 16 are configured in their interplay in such a way that during operation an excess pressure is produced there when the temperature control medium 17 is blown into the storage box 16. Outlet openings 16a in a wall of the storage box 16 are arranged in such a way that the temperature control medium 17 flowing out of them due to the excess pressure flows predominantly into the battery compartments 14a through inlet openings 14c (FIG. 11) which are located there and face the storage box 16, in order to keep the temperature of the battery modules 14b as uniform as possible.

In order to optimize the distribution of the temperature control medium 17 flowing through the intake opening into the storage box 16 in the interior of the storage box 16, one or more gas guide elements 19, in particular air guide plates (oriented horizontally and/or vertically), may be present. As a result, a more uniform distribution of the temperature control medium 17 in the storage box 16 can be achieved.

As illustrated in **FIG. 11** in a perspective view (a), a top view (b) and a side view (c), an intermediate space is provided in each battery compartment 14a between its wall and the battery module 14b, which intermediate space is designed such that, on the one hand, there is a vertical spacing between vertically adjacent battery modules 14b and, on the other hand, a flow-through space is provided for the temperature control medium 17, which space also serves for the exchange of heat between the battery module and the temperature control medium flowing through.

The dimensions, in particular the height, of the intermediate spaces must be suitable for ensuring a sufficient flow of temperature control medium in order to achieve a largely uniform temperature control effect on the side of the battery module 14b facing the intermediate spaces, so that the heat exchange between the temperature control medium 17 and the battery module 14b can take place as optimally as possible. In this respect, it has been found that, in any case, when air is used as a temperature control medium, a minimum extent, in particular height, of the intermediate spaces should ideally be at least 5 mm.

Between a front side of the battery modules 14b facing the inner wall of the module housing 2a and the module housing 2a, there is located in each battery compartment 14a a further open space region, via which the temperature control medium can be drawn in again and supplied to the inner functional region 15b of the air conditioner 15. As a result, a closed current (circulation) of the temperature control medium can be achieved within the module housing 2a.

The outlet openings 16a on the storage box 16 are designed in such a way that, on the one hand, the excess pressure in the storage box 16 is largely maintained and, on the other hand, the flow of the temperature control medium 17 into the intermediate spaces is sufficiently large to reach a defined desired temperature range. By means of the excess pressure in the storage box 16, a largely uniform distribution of the temperature control medium 17 into the intermediate spaces can be achieved. This is illustrated in FIG. 10, wherein only the battery module 14b is shown in each case for the purpose of simplifying the illustration of the battery regions 14.

After the temperature control medium 17 has flowed back from the battery compartments through the open space regions to the outer functional region 15a, it can be discharged there as outgoing flow 18 through the opening 21 into the module environment.

A side effect of the intermediate spaces between the stacked battery modules **14b is** increased fire protection, since the intermediate spaces through which the temperature control medium 17 flows form a thermal barrier. Typical values for the thermal conductivity of the temperature control medium flow in the case of air are about 0.026 W/(m·K) and thus in the range of rock wool, which has a good barrier capability.

By suitably selecting the height of the intermediate spaces (>5 mm), heat transfer from one battery module **14b** to the adjacent one can be reduced in such a way that even a thermal runaway can be limited to one affected battery module 14b.

The volumetric energy density $\rho$ of an energy storage device is calculated from the ratio of storage energy to the volume of the energy storage device. In the case of the above-mentioned energy storage modules, the volume is the volume occupied by the module housing 2a (hereinafter marked with the index "G") including its interior volume $V_G$ :

$$\rho = E/V_G \qquad\qquad (1)$$

The volume $V_G$ is calculated from the external dimensions of the module housing 2a:

$$V_G = h_G \cdot l_G \cdot b_G \qquad\qquad (2)$$

In order to optimize the energy density, it is necessary to maximize the proportion of volume with battery modules 14b (battery volume) in relation to the remaining volume (passive volume) of the energy storage module 2 as far as possible. In the specific case of the energy storage module 2 shown in FIGS. 8 to 11, the passive volume is decisively determined by the air conditioning unit 15, the storage box 16 and the remaining volume not occupied by the battery modules 14b.

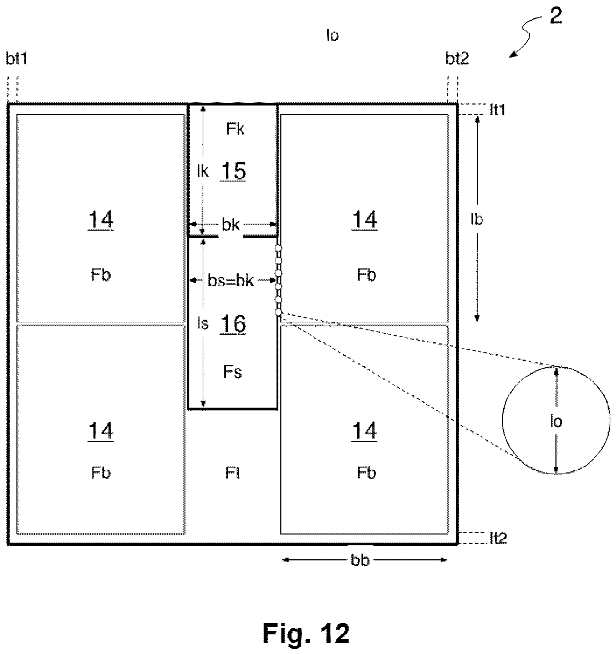

**FIG. 12** shows a sketch derived from FIG. 8 for determining dimensions of the components installed in the energy storage module 2 of FIG. 8 in view of optimizing the volumetric energy density of the energy storage module.

First, the following surfaces are observed in plan view:

Fb = area of battery region

Fk = area of air conditioner

Fs = area of storage box

Ft = remaining area including thermal insulation of the module housing (edge region on the inner housing wall)

The area Fb is essentially defined by the outer dimensions of the battery regions 14 (or of the battery compartments). The sum of the area of all battery regions 14 is 4·Fb.

The essential optimization range lies between the battery region areas Fb and primarily concerns the areas Fk, Fs and Ft. The width of the area Ft is determined decisively by the width bk of the air conditioner 15 and can, for example, lie in the range 20-40 cm. The length of the air conditioner is designated here by Ik:

$$Fk = bk \cdot Ik \qquad (3)$$

The width bs of the storage box 16 corresponds approximately to bk. For the optimization of the energy density, only the largest width is relevant and is therefore referred to below by bk.

The minimum length Is of the storage box 16 is determined by the (horizontal) length lo of the outlet openings 16a.

$$Is \geq 2 \cdot lo \qquad (4)$$

Thus, the surface area of the storage box 16 is as follows:

$$Fs = bk \cdot Is \geq bk \cdot 2 \cdot lo \qquad (5)$$

The area Ft results from the remaining areas and is composed mainly of the area of the thermal insulation of the module housing 2a and the remaining area of the central region between the battery regions 14. For the total area $F_G$ of the module housing therefore applies, at least to a good approximation:

$$F_G = l_G \cdot b_G = 4 \cdot Fb + Fk + Fs + Ft \qquad (6)$$

The following applies to the length:

$$l_G = 2 \cdot lb + lt1 + lt2 + la \qquad (7)$$

with the length lb of the battery region 14, the lengths lt1 and lt2 of the front and rear open space region and the thermal insulation, and an (optional) additional balancing length la.

The following applies to the width:

$$b_G = 2 \cdot bb + bk + bt1 + bt2 + ba \qquad (8)$$

with the width bb of the battery region 14, the widths bt1 and bt2 of the left and right thermal insulation and the (optional) additional balancing length ba.

For the optimization of the height, the following heights are considered

hb:       height of battery region 14
hz:       height of intermediate space between adjacent stacked battery modules 14b
ht1/2:    height of upper and lower thermal insulation.
ha:       additional (optional) balancing height

The following applies to the height:

$$h_G = 14b \cdot (hb + hz) + ht1 + ht2 + ha \qquad (9)$$

with the number n of battery modules in a stack.

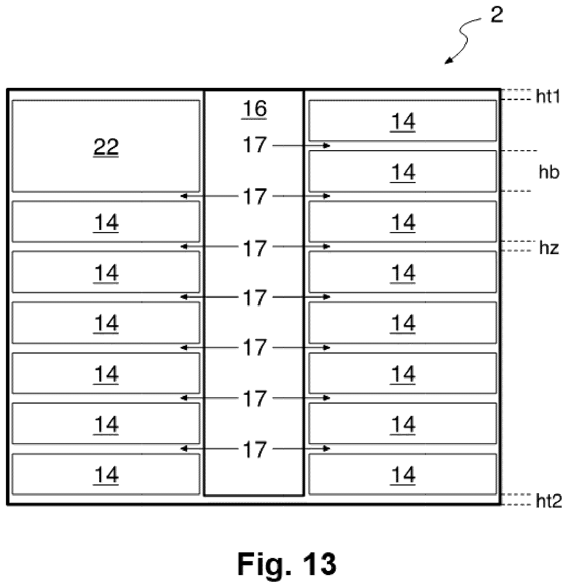

For the operation of the battery modules, at least one battery control unit (BCU) is required, as illustrated in FIG. 13, which is to be accommodated here in the battery region 14.

For this battery region 14, the following additionally applies:

$$h_G \geq m \cdot (hb + hz) + ht1 + ht2 + h_{BCU} + ha \qquad (10)$$

with the height $h_{BCU}$ of the BCU and the number m of battery modules in a stack with the BCU, where m < n.

The module housing 2a accommodates a number k of battery strands without a BCU, each having p battery compartments 14a stacked one on top of the other.

Accordingly, in an example in which the battery modules 14b arranged in the four stacks are connected in 3 battery strands each with 10 battery modules (battery strand = series connection of a plurality of battery modules), where n=8 and m=6:

$$k \cdot p = 3 \cdot n + m \qquad (11)$$

The battery housing is of approximately cubic construction

$$l_G \approx b_G \approx h_G \qquad (12)$$

In this case, " $\approx$ " is to mean that the length differences between $l_G$ , $b_G$ and $h_G$ in pairs are at most 20 cm

For determining the optimum energy density under the secondary condition of an approximate cubic housing shape according to equation (12) and the integration of the air conditioner 15 and the storage box 16, the following optimization condition thus results:

$$2 \cdot lb + lt1 + lt2 + lk \approx 2 \cdot bb + bk + bt1 + bt2 + ba \approx n \cdot (hb + hz) + ht1 + ht2 + ha$$

LIST OF REFERENCE NUMERALS

| 1 | energy storage system |
|---|---|
| 2 | energy storage module |
| 3 | control module |
| 4 | base structure |
| 5 | module strand |
| 6 | housing opening |
| 7 | cover |
| 8 | (connecting) line or line bundle or line routing, vertical |
| 9 | (connecting) line or line bundle or line routing, horizontal |
| 10 | conduit |
| 11 | detachable line connection, in particular plug-in connector or connection |
| 12 | outer protective layer |
| 13 | inner protective layer |
| 14 | battery region |
| 14a | battery compartment |
| 14b | battery module |
| 14c | inlet opening |
| 15 | air conditioner |
| 15a | external functional region of air conditioner |
| 15b | internal functional region of air conditioner |
| 16 | storage box |
| 16a | outlet openings of the storage box |
| 17 | temperature control medium and its incoming flow |
| 18 | outgoing flow 18 of the temperature control medium |

19    gas guide element
20    opening, in particular inlet opening in the outer functional region 15a
21    opening, in particular outlet opening in the outer functional region 15a

For the dimensions in FIG. 12, see the legend in the associated description of the figures

**Claims**

1. A modular electrochemical energy storage system (1) comprising a plurality of modules (2; 3), comprising:

   at least one energy storage module (2), which is configured for electrochemical storage of energy and comprises a first housing of a first housing type;
   at least one control module (3), which is configured as an inverter and control unit for at least partial control of the energy storage system (1) and comprises a second housing of a second housing type;
   wherein the first housing and the second housing each have at least one housing opening (6) on their upper housing sides and lower housing sides and a plurality of modules (2; 3) can be stacked vertically one above the other, independently of their housing design, in such a way that, in the case of two modules (2; 3) which are vertically adjacent in the stack, a housing opening (6) on the lower housing side of the upper one of the two modules (2; 3) then overlaps a housing opening (6) on the upper housing side of the lower one of the two modules (2; 3) in such a way that, by means of these overlapping housing openings (6), a vertical line routing (8) is made possible for the line-bound connection of a module lying in the stack above the lower one of the two modules (2; 3).

2. The energy storage system (1) of claim 1, further comprising a base structure (4) configured as a support structure for directly or indirectly supporting the modules (2; 3).

3. The energy storage system (1) according to claim 2, wherein the base structure (4) comprises at least one conduit (10) (10) protected against external influences, which is configured for the horizontal laying of one or more connecting lines (9) between two or more modules (2; 3) which can be supported horizontally next to one another by the base structure (4).

4. The energy storage system (1) according to claim 3, wherein the or at least one conduit (10) is designed completely or in part as a hose or tube.

5. The energy storage system (1) according to claim 3 or 4, wherein the base structure (4) comprises two conduits each protected against external influences, which are each configured for the horizontal laying of one or more connecting lines (9) between two or more modules (2; 3) which are supported horizontally next to one another by the base structure (4).

6. The energy storage system (1) according to any one of claims 2 to 5, wherein the base structure (4) at least in part is formed from a mineral material.

7. The energy storage system (1) according to any one of the preceding claims, wherein the housing openings (6) of at least one of the modules (2; 3) are each provided with a fluid-tight seal (7).

8. The energy storage system (1) according to any one of the preceding claims, wherein:

   a first connector is arranged in a housing opening (6) on the housing upper side of a module;
   a second connector corresponding to the first connector is arranged in a housing opening (6) on the housing lower side of a further module;
   the two connectors are configured to establish a detachable line connection (11) between them and thus between the two modules (2; 3); and
   these two housing openings (6) of the two modules (2; 3) are arranged in such a way that the two modules (2; 3) can be stacked vertically one above the other in such a way that the two housing openings (6) overlap during stacking, and the detachable line connection (11) is thereby produced.

9. The energy storage system (1) according to any one of the preceding claims, further comprising one or more covers (7), in each case for closing a housing opening (6) of a respective module, which is not required for vertical line routing or line connection.

10. The energy storage system (1) according to any one of the preceding claims, wherein the first housing type and/or the second housing type in each case has a cuboid outer contour.

11. The energy storage system (1) according to claim 10, wherein the cuboid outer contour is at least approximately cubic, so that the edge lengths of the outer contour differ by not more than 15%, in particular by not more than 10%, in particular by not more than 5% of the longest edge length.

12. The energy storage system (1) according to any one of the preceding claims, wherein the first type of housing and the second type of housing coincide with respect to their outer contour, with respect to their protection against the penetration of foreign bodies or fluids and/or with respect to a number and/or position of their housing openings (6).

13. The energy storage system (1) according to any one of claims 1 to 12, wherein the housing of the first housing type is protected in such a way that it has a higher protection against the penetration of foreign bodies or fluids than the housing of the second housing type.

14. The energy storage system (1) according to any one of the preceding claims, wherein a wall of at least one first housing and/or at least one second housing is lined at least in sections with a thermally insulating and refractory protective layer (12; 13) on its respective inner side or outer side.

15. The energy storage system (1) according to claim 14, wherein the protective layer has the following properties:

   - the mechanical integrity and thermal insulation of the protective layer are maintained at atmospheric pressure up to a temperature of at least 500 °C, preferably of at least 1000 °C;
   - the melting point of the protective layer at atmospheric pressure is at least 500 °C, preferably at least 1000 °C;
   - the thermal conductivity of the protective layer is less than 0.035 W/(m·K).

16. The energy storage system (1) according to any one of the preceding claims, wherein at least one energy storage module (2) within its first housing comprises:

   a plurality of battery modules (14b) arranged in a stack, each having one or more battery cells;
   a storage box (16) for a gaseous temperature control medium (17); and
   an air conditioner configured to control the temperature of the temperature medium (17) inside the housing and to introduce it into the storage box (16) to build up an excess pressure there;
   wherein the battery modules (2; 3) are stacked in such a way that a respective intermediate space is located between battery modules (14b) adjacent in the stack; and
   wherein the storage box (16) has outlet openings (16a) for the temperature control medium (17) corresponding to the intermediate spaces such that, during operation of the air conditioner (15), the temperature control medium (17) under excess pressure in the storage box (16) flows into at least some of the intermediate spaces as it flows out of the outlet openings (16a) in order to control the temperature of the battery modules (2; 3) adjacent to the respective intermediate space.

17. The energy storage system (1) according to claim 16, wherein the minimum diameter of the intermediate spaces is at least 5 mm.

18. The energy storage system (1) according to claim 16 or 17, wherein there is a discharge channel between the inner wall of the housing and the facing end faces of the battery modules (2; 3) adjacent to the inner wall, through which channel the temperature control medium (17) can be returned to the air conditioner (15) after flowing through the intermediate spaces between the battery modules (14b), so that during its operation a circulation of the temperature control medium (17) in the housing is produced which is driven by it.

19. The energy storage system (1) according to any one of claims 16 to 18, wherein the storage box (16) comprises, in its interior, one or more gas guide elements, which are configured to set the temperature medium introduced (17) by the air conditioner (15) into the storage box (16) at least in part in a circulation movement in the interior of the storage box

20. The energy storage system (1) according to any one of claims 16 to 19, wherein the arrangement of the battery modules (2; 3) in the first housing comprises two stacks of in each case a plurality of battery modules (14b), and the storage box (16) and the air conditioner (15) are arranged in a space region lying between the two stacks, so that the temperature control medium (17) flowing out of the storage box (16) through its outlet openings (16a) during operation of the air conditioner (15) can flow into the respective interspaces in both stacks for their respective temperature control.

21. The energy storage system (1) according to claim 20, wherein the following relationship applies:

$$2 \cdot lb + lt1 + lt2 + lk$$

$$\approx 2 \cdot bb + bk + bt1 + bt2 + ba$$

$$\approx n \cdot (hb + hz) + ht1 + ht2 + ha;$$

with the following parameters:

lb: length of the battery module (14b) parallel to its stacking direction in the respective stack;
lt1/2: opposite lengths of the intermediate space between the housing inner wall and the stacks;
lt2: length of front intermediate space between
lk: maximum length of the space region between the two stacks
bb: width of battery module (14b);
bk: maximum width of the space region between the two stacks;
bt1: width of a thermal insulation between the housing inner wall and the first stack parallel to its stacking direction;
bt2: width of thermal insulation between the housing inner wall and the second stack parallel to its stacking direction;
ba: additional balancing width;
n: number of battery modules (2; 3) in the stack;
hb: height of battery module (14b) along stacking direction;
hz: height of the intermediate space between adjacent battery modules (14b) of a stack;
ht1: height of thermal insulation between the inner housing wall and the stack at its upper end;
ht2: height of thermal insulation between the housing inner wall and the stack at its lower end;
ha: additional balancing heights;

wherein "A ≈ B" means: A = B·(1 ± 0.15).

22. The energy storage system (1) according to any one of the preceding claims, wherein the energy storage system (1) is designed as a kit.

**Fig. 1**

**Fig. 2**

**(a)**          **(b)**          **(c)**

**Fig. 3A**

(d)

(e)

(f)

(g)

# Fig. 3B

**Fig. 4**

**Fig. 5**

**Fig. 6**

**Fig. 7**

**Fig. 8**

**Fig. 9**

**Fig. 10**

(a)

(b)

(c)

**Fig. 11**

**Fig. 12**

2

ht1

16

14

22

17

14 hb

17 17

14 14

17 17

14 14 hz

17 17

14 14

17 17

14 14

17 17

14 14

17 17

14 14 ht2

**Fig. 13**

Europäisches
Patentamt

European
Patent Office

Office européen
des brevets

# EUROPEAN SEARCH REPORT

**Application Number**

EP 25 18 3141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/212784 A1 (ENERTEK HOLDINGS PTY LTD [AU]) 9 November 2023 (2023-11-09) | 1,2,6-8, 10-13,22 | INV. H01M10/613 |
| Y | * figures 24-28 * | 14,15 | H01M10/627 |
| A | * page 2, line 8 - page 31, line 9 * | 3-5,9, 16-21 | H01M50/204 H01M10/42 |
| | ----- | | H01M10/48 |
| Y | JP 2010 062093 A (PANASONIC CORP) 18 March 2010 (2010-03-18) * figures 1-3 * | 14,15 | H01M10/63 H01M10/6556 H01M10/6562 |
| | ----- | | H01M10/6566 |
| A | CN 115 566 318 A (NINGDE POWER SUPPLY CO STATE GRID FUJIAN ELECTRIC POWER CO LTD ET AL.) 3 January 2023 (2023-01-03) * figures 1-7 * | 1-22 | H01M10/658 H01M10/663 H01M50/207 H01M50/258 H01M50/502 |
| | ----- | | |
| A | CN 116 115 929 A (CGN DAWU YANGPING WIND POWER GENERATION CO LTD ET AL.) 16 May 2023 (2023-05-16) * figures 1-7 * | 1-22 | |
| | ----- | | |
| A | Anonymous: "Independence Day System Introducing the all-in-one Energy Production and Storage System designed for Energy Independence", ARVIO, 4 June 2019 (2019-06-04), pages 1-4, XP055802814, Retrieved from the Internet: URL:https://solarbatteriesonline.com.au/wp-content/uploads/2018/06/Independence-Day-System-Brochure.pdf [retrieved on 2021-05-10] * the whole document * | 1-22 | **TECHNICAL FIELDS SEARCHED (IPC)** H01M |
| | ----- | | |

The present search report has been drawn up for all claims

| Place of search | Date of completion of the search | Examiner |
|---|---|---|
| Munich | 15 October 2025 | Zimmermann, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P4C01)

**EP 4 668 415 A1**

**ANNEX TO THE EUROPEAN SEARCH REPORT
ON EUROPEAN PATENT APPLICATION NO.**                    EP 25 18 3141

This annex lists the patent family members relating to the patent documents cited in  the above-mentioned European search report.
The members are as contained in the European Patent Office EDP file on
The European Patent Office is in no way liable for these particulars which are merely given for the purpose of information.

15-10-2025

| Patent document cited in search report | Publication date | Patent family member(s) | Publication date |
|---|---|---|---|
| WO 2023212784 A1 | 09-11-2023 | NONE | |
| JP 2010062093 A | 18-03-2010 | NONE | |
| CN 115566318 A | 03-01-2023 | NONE | |
| CN 116115929 A | 16-05-2023 | NONE | |

EPO FORM P0459

For more details about this annex : see Official Journal of the European Patent Office, No. 12/82